# EUROPEAN PATENT APPLICATION

(11) **EP 0 805 018 A2**
(43) Date of publication of application: **05.11.1997**
(21) Application number: 97400961.5
(22) Date of filing: 29.04.1997
(51) Int. Cl.: B29D 5/10

(54) **Controlled peel seal with indicating feature**

(30) Priority: 29.04.1996 US 638781
(71) Applicant: ILLINOIS TOOL WORKS INC., Glenview, Illinois 60025-5811 (US)
(72) Inventor: Share, Lawrence, Skokie, Illinois 60076 (US); Ramsey, Ronald, Naperville, Illinois 60564 (US)
(74) Representative: Texier, Christian

(57) **Abstract**

A zipper closure for a reclosable plastic package has a tamper-evident, non-reclosable peel seal which gives a positive indication of having been broken when the package is first opened, and which is not resealable after being first opened. The zipper closure has a first web, to which a first polymeric resin material is bonded, and a second web facing the first and to which a second polymeric resin material is bonded. The first polymeric resin material has a great affinity for the second polymeric resin material. One of the first and second polymeric resin materials has a low cohesive strength, so that it will break rather than stretch under tension. Heated peel-seal sealing bars clamp the first and second web together, bonding the first and second polymeric resin materials to one another. When the peel seal is first opened, a portion of the one of the first and second polymeric resin materials having a low cohesive strength remains bonded to the other of the first and second polymeric resin materials and separates from the remainder thereof. The separation causes a whitening or discoloration in the adhesive, giving a visual indication that the peel seal has been broken. The invention also includes a method for making the tamper-evident, non-reclosable peel seal.

## Description

### Background of the Invention

### 1. Field of the Invention

The present invention relates, in general, to the packaging art, and, more particularly, is concerned with a continuous reclosable plastic zipper of a type which is used to close the mouth of a bag or package, and which includes a tamper-evident non-reclosable peel seal with a feature giving a clear indication of the integrity of the peel seal.

### 2. Description of the Prior Art

In the use of plastic bags and packages, particularly for foodstuffs, it is important that the bag be hermetically sealed until the purchaser acquires the bag and its contents, takes them home, and opens the bag or package for the first time. It is then commercially attractive and useful for the consumer that the bag or package be reclosable so that its contents may be protected. Flexible plastic zippers have proven to be excellent for reclosable bags, because they may be manufactured with high-speed equipment and are reliable for repeated reuse. A typical zipper is one which has a groove at one side of the bag mouth and a rib at the other side, which rib may interlock into the groove when the sides of the mouth of the bag are pressed together. Alternatively, a member having a plurality of ribs may be on one side of the bag mouth, while a member having a plurality of channels may be on the other side, the ribs locking into the channels when the sides of the mouth of the bag are pressed together. In such a case, there may be no difference in appearance between the two members, as the ribs may simply be the intervals between channels on a strip which may lock into another of the same kind. In general, and in short, some form of male/female interengagement is used to join the two sides of the bag mouth together. The so-called members, or strips, are bonded in some manner to the material from which the bags themselves are manufactured.

Usually, pull flanges extend above the rib and groove strips, which pull flanges may be pulled apart for access to the interior of the bag.

Although flexible zippers of this variety are quite popular, they do not always prevent the inadvertent or unwelcome opening of a bag or package within the store, and various additions have been made to provide tamper-evident seals which would reveal when it has been opened prior to purchase.

U.S. Patent No. 5,425,825 to Rasko and Share, which is commonly assigned with the present application and which is incorporated herein by reference, shows and provides a solution to these problems in the form of an improved tamper-evident non-reclosable peel seal suitable for use with reclosable plastic zippers in plastic bags and other packages to provide a hermetic seal until the peel seal is opened for the first time, and to provide a peel seal which is non-reclosable after being opened.

More specifically, in the invention shown in U.S. Patent No. 5,425,825, reclosable plastic bags and packages are assembled using two interlocking rib and groove members which reclosably seal the plastic bag or package. In the process by which the reclosable plastic bags and packages are assembled, a strip-like area adjacent and parallel to one of the two interlocking rib or groove members is continuously given a treatment, for example, a flame or corona discharge treatment, to cause an adhesive to preferentially adhere to the treated area. The adhesive, which is applied to the treated area to form the peel seal, is retained on the treated area, rather than on the opposed interlocking rib or groove member not so treated, when the peel seal is broken for the first time. Thereafter, the peel seal remains broken, as the adhesive does not have an affinity for the untreated plastic of the opposite rib or groove number once it has been separated therefrom.

U.S. Patent No. 5,435,864 to Machacek and Share, which is also commonly assigned with the present application and which is also incorporated herein by reference, shows and provides an alternate solution to the same problems, wherein the adhesive is coextruded onto a strip-like area adjacent and parallel to one of the two interlocking rib or groove members of the interlockable zipper profile. In this instance, the coextrusion causes the adhesive to preferentially adhere to the strip-like area, where the flame or corona discharge treatment did above. The adhesive is retained on that area when the peel seal is broken for the first time. As above, the peel seal remains broken, after it is broken for the first time, as the adhesive does not have an affinity for the plastic of the opposite rib or groove member once it has been separated therefrom.

While the inventions shown in U.S. Patents Nos. 5,425,825 and 5,435,864 have met with considerable success, the need for a tamper-evident non-reclosable peel seal which would give a clear indication of the integrity thereof upon visual inspection has recently arisen. In this regard, it has proven to be difficult to determine upon a quick visual inspection whether the peel seals shown in the above-noted U.S. patents are sealed or broken. The present invention, which may be viewed as an improvement upon those shown in these U.S. patents, provides this improved tamper-evident non-reclosable peel seal, which provides a positive indication of having been broken when a package is first opened, and which provides a peel seal which is non-reclosable after being first opened.

### Summary of the Invention

Accordingly, the present invention is a zipper closure for a reclosable plastic package, wherein the zipper closure has a tamper-evident, non-reclosable peel seal which gives a positive indication of having been broken when the package is first opened, and which is not resealable after being first opened. The present invention is also a method for forming the tamper-evident, non-reclosable peel seal.

Essentially, the invention may be practiced by bonding a first polymeric resin material to one web of a zipper closure, and by bonding a second polymeric resin material to the facing web, the first and second polymeric resin materials having a great affinity for one another. Upon application of the peel-seal sealing jaws through the film from which the package is formed onto the webs in the region of the first and second polymeric resin materials, the portions of the first and second polymeric resin materials directly beneath the sealing jaws adhere to one another. When the package is later opened, the polymeric resin materials have a substantial affinity to remain sealed to one another, and will not peel therefrom, in the region directly affected by the sealing jaws. One of the first and second polymeric resin materials, in addition to having a great affinity for the other polymeric resin material, has a low cohesive strength. As a consequence, a section of that polymeric resin material separates from the remaining portions thereof either completely or partially. The separation of that polymeric resin material in this manner causes that polymeric resin material to discolor or whiten, thereby giving an obvious visual indication that the seal has been broken.

Preferably, the width of the first and second polymeric resin material on the webs is greater than that of the peel-seal sealing jaws to provide for discrepancies in the location and alignment thereof that may exist in conventional sealing equipment.

The present invention has as its advantages that it provides a visual indication of the seal location (upon breakage) for set up, quality control, inspection and tamper-evidence. It also provides a peel seal having an opening force consistently in the range from 2.0 to 2.5 lbs/inch.

More broadly, the zipper closure of the present invention comprises a first flexible interlocking rib and groove member having a first web, and a second flexible interlocking rib and groove member having a second web. The first and second flexible interlocking rib and groove members interlock with one another; in such condition, the first and second webs face one another. The first and second flexible interlocking rib and groove members are extruded from a standard polyethylene material, such as low-density polyethylene (LDPE).

A first polymeric resin material is bonded to the surface of the first web facing the second web by coextrusion, by coating or by application thereon following a surface modifying treatment.

The surface of the second web facing the first web is provided with a second polymeric resin material, for which the adhesive has a great affinity. The second polymeric resin material is bonded to the surface of the second web facing the first web by coextrusion, by coating or by application thereon following a surface modifying treatment.

During package manufacture, at least a portion of the first polymeric resin material is bonded to the second polymeric resin material by peel-seal sealing bars. One of the first and second polymeric resin materials has a low cohesive strength. When the package is first opened, the polymeric resin material having the low cohesive strength breaks and separates from the remainder thereof. This sets up an internal stress within that polymeric resin material, causing the whitening or discoloration ultimately serving as the indication that the peel seal has been broken.

The method for forming the tamper-evident, non-reclosable peel seal comprises the steps of extruding a first flexible interlocking rib and groove member having a first web, and of bonding a first polymeric material to the first web. The method further comprises the steps of extruding a second flexible interlocking rib and groove member having a second web, and of bonding a second polymeric resin material to the second web. Finally, the first polymeric resin material is bonded to the second polymeric resin material by clamping the first and second webs together with first and second heated peel-seal sealing bars.

The present invention will now be described in more complete detail with reference being made to the figures identified below.

### Brief Description of the Drawings

Figure 1 is a schematic cross-sectional view of the top of a reclosable plastic bag having a prior-art peel seal;
Figure 2 is a view similar to that of Figure 1, but showing the result of breaking the prior-art peel seal;
Figure 3 is a cross section taken through an extruded profile used to make zippers having the peel seals of the present invention;
Figure 4 is a cross section taken through an extruded profile used to make zippers having an alternate embodiment of the peel seals of the present invention;
Figure 5 shows the slitting of the short webs from the profile shown in Figure 3;
Figure 6 shows the appearance of the profile shown in Figure 3 following the joining of the short webs to the long webs;
Figure 7 is a schematic cross-sectional view of the top of a reclosable plastic bag having the peel seal of the present invention;
Figure 8 is a view similar to that of Figure 7, but showing the result of breaking one variant of the peel seal of the present invention;
Figure 9 is a view similar to that of Figure 8, but showing the result of breaking another variant of the peel seal of the present invention;
Figure 10 is a schematic cross-sectional view of the top of a reclosable plastic bag having an alternate embodiment of the peel seal of the present invention;
Figure 11 is a view similar to that of Figure 10, but showing the result of breaking the peel seal illustrated therein;
Figure 12 is a schematic cross-sectional view of the top of a reclosable plastic bag having another embodiment of the peel seal of the present invention; and
Figure 13 is a view similar to that of Figure 12, but showing the result of breaking the peel seal illustrated therein.

### Detailed Description of the Preferred Embodiments

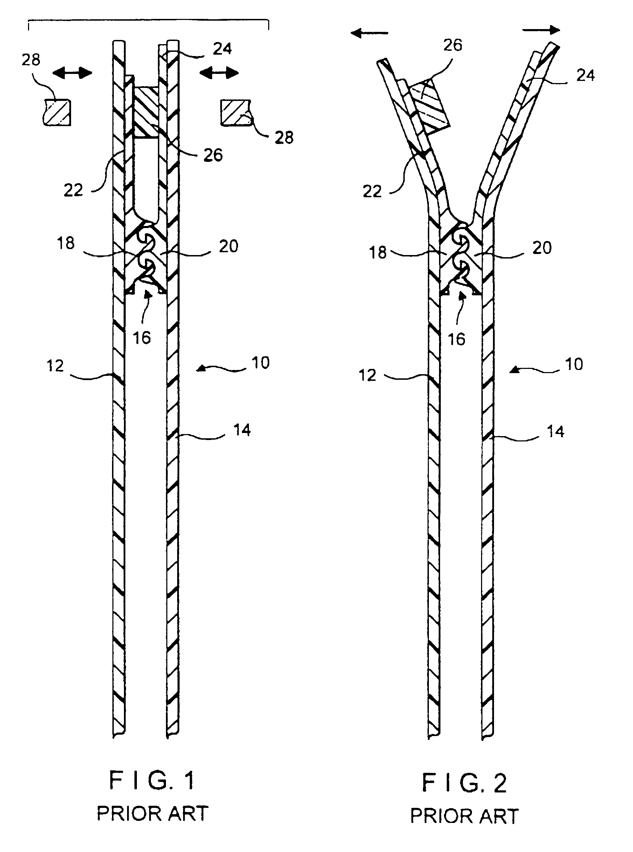

Turning now to the several drawing figures, Figures 1 and 2 illustrate the operation of the tamper-evident, non-reclosable peel seal made in accordance with the methods shown in U.S. Patents Nos. 5,425,825 and 5,435,864.

Figure 1 is a schematic cross-sectional view of the top of a reclosable plastic bag 10 having that prior-art peel seal. Bag 10, shown in a sealed condition, comprises a front sheet 12 and a back sheet 14, both of which may be extruded from a thermoplastic resin material, such as polyethylene. In fact, sheets 12, 14 may be physically part of a single sheet folded at the bottom of the bag 10. A zipper 16, formed perhaps by interlocking rib and groove members 18, 20, runs across the top of the bag 10 and provides it with a reclosable opening.

One interlocking rib and groove member 18 has a short web 22 by which it is attached to front sheet 12 by heat sealing during the manufacture of bag 10. Generally, such manufacture is done on a vertical or horizontal form-fill-and-seal (FFS) machine concurrently with the packaging of some consumer food product within the bag 10. Similarly, the other interlocking rib and groove member 20 has a long web 24 by which it is attached to back sheet 14 by heat sealing during the manufacture of bag 10. The relative lengths of the webs 22, 24 has no particular significance other that to enable one to be distinguished from the other in the discussion to follow.

A peel-seal adhesive 26 is applied to the short web 22 during the manufacture of the zipper 16. Pierce & Stevens E4009D adhesive, a polyethylene/ ethylene vinyl acetate composition which has a high cohesive strength, but a low adhesive strength to polyethylene, may be used as peel-seal adhesive 26. In general, a polymeric resin material having a high cohesive strength, but a low adhesive strength to polyethylene, may be used as peel-seal adhesive 26. As discussed in U.S. Patents Nos. 5,425,825 and 5,435,864, the surface of short web 22 which ultimately faces long web 24 in a manufactured bag 10 may be given a surface modifying treatment, such as a flame or corona-discharge treatment. The treatment causes the peel-seal adhesive 26 to preferentially adhere thereto when the bag 10 is first opened. Subsequently, the adhesive 26 does not readhere to the long web 24. Alternatively, the adhesive 26 may be coextruded onto the short web 22, a process which also causes it to preferentially adhere thereto.

During the manufacture of bag 10 on an FFS machine, peel-seal sealing bars 28, which are heated bars pressed momentarily against and across the top of the bag 10, seal the adhesive 26 to the long web 24 and forms a peel seal therefrom.

Figure 2 shows the result of breaking the peel seal in the prior-art bag 10 shown in Figure 1 by pulling the front sheet 12 apart from the back sheet 14 at the top of the bag 10 above the zipper 16 as suggested by the arrows. Adhesive 26 remains attached to short web 22 leaving no residue on long web 24.

As noted above, this invention has been successful in providing a peel seal which does not readhere upon first being opened. Further, as illustrated in Figure 2, the adhesive providing the peel seal resides entirely on the web to which it is preferentially adhered without stringing across the bag opening. However, it has often not been readily apparent upon cursory inspection whether a peel seal has been broken, as the prior-art seals shown in U.S. Patents Nos. 5,425,825 and 5,435;864 give no obvious indication of breakage. The need for such an obvious visual indication is met by the present invention.

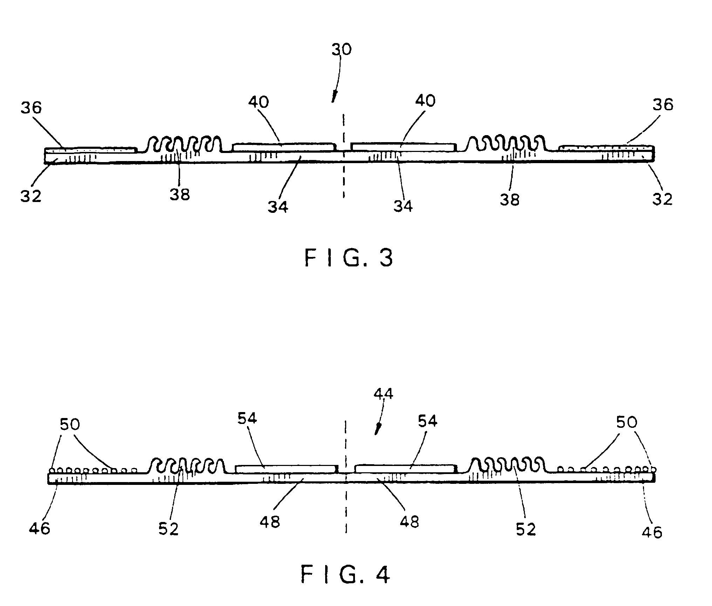

Figure 3 is a cross section taken through an extruded profile 30 from which the zippers having the peel seals of the present invention are made. The profile 30 has two short webs 32 and two long webs 34, which together make up a broad center portion ultimately slit at the point indicated by the dashed line.

Profile 30 is extruded from a synthetic polymeric resin material, such as polyethylene, specifically, low-density polyethylene (LDPE). Adhesive 36 is disposed on the short web 32 either by coextrusion therewith, or by coating on the surface thereof which may follow a surface-modifying treatment, such as by flame or corona discharge, where the adhesive 36 has a low adhesive strength to polyethylene. Rib and groove members 38 separate the short webs 32 from the broad center portion providing long webs 34. In general, adhesive 36 is a polymeric resin material comprising a polyethylene/ethylene vinyl acetate composition.

Profile 30 differs from that shown in U.S. Patents Nos. 5,425,825 and 5,435,864 by including another polymeric resin material 40 on each of the long webs 34. The polymeric resin material 40 may be coextruded onto the long webs 34, or may be applied onto the surfaces of the long webs 34 following the extrusion of the profile 30, and may also be a polyethylene/ethylene vinyl acetate composition.

Pierce & Stevens Proxmelt E4051D adhesive may be used as adhesive 36 for providing the peel seals. In general, the adhesive used may have low internal tensile strength and low elongation under tensile forces; that is, when placed under tension, it should break rather than stretch. E4051D has a low cohesive strength, but a high adhesive strength to polyethylene.

The polymeric resin material 40 may be of an ethylene vinyl acetate (EVA) copolymer material, such as Quantum VE 625,000, a 19% EVA copolymer, which is also a polyethylene/ethylene vinyl acetate composition. Such a material is very attractive to the heat-activated adhesive 36, and has a high cohesive strength and a high adhesive strength to polyethylene. Figure 4 is a cross section taken through an extruded profile 44 from which the zippers having the peel seals of the present invention may also be made. As before, the profile 44 has two short webs 46 and two long webs 48, which together make up a broad center portion ultimately slit at the point indicated by the dashed line.

Profile 44 is quite like profile 30, and is extruded from a synthetic polymeric resin material, such as polyethylene, specifically, low-density polyethylene (LDPE). Adhesive 50 is disposed on the short webs 46 either by coextrusion therewith, or by coating on the surface thereof which may follow a surface-modifying treatment, such as by flame or corona discharge, where the adhesive 50 has a low adhesive strength to polyethylene, in the form of a plurality of parallel beads or lines. The application of the adhesive 50 in the form of beads or lines permits it to separate from the short webs 46 without fracture or fiber strands, when a peel seal is broken, as will be described below. As before, adhesive 50 is a polymeric resin material comprising a polyethylene/ethylene vinyl acetate composition.

Rib and groove members 52 separate the short webs 46 from the broad center portion providing long webs 48. As above, another polymeric resin material 54, also a polyethylene/ethylene vinyl acetate composition, is included on each of the long webs 48 either by coextrusion or coating. Adhesive 50 and polymeric resin material 54 may be of the respective materials described above as being useful for this purpose.

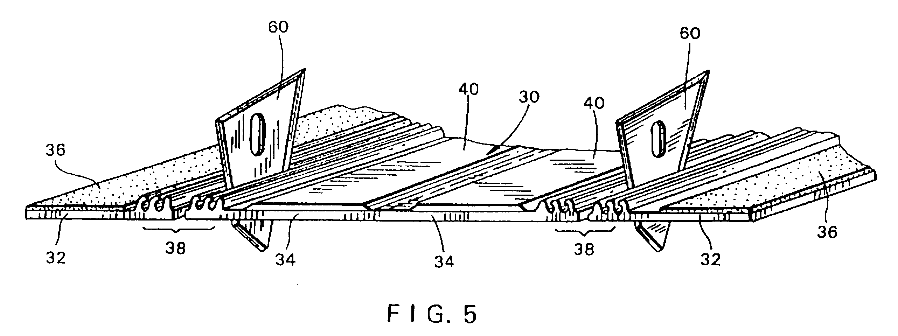

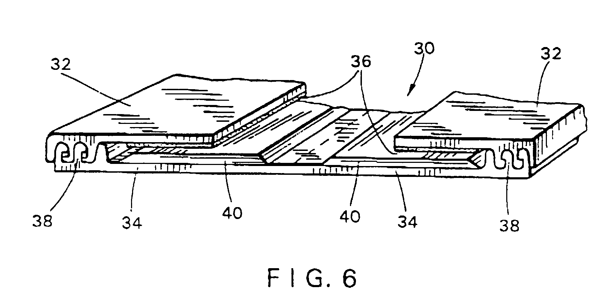

Figure 5 shows the separation of short webs 32 from long webs 34 in profile 30. Two slitting blades 60 cut the profile 30 longitudinally through the rib and groove members 38. Profile 44 of Figure 4 is cut in a similar manner. Figure 6 shows the appearance of profile 30 when the two short webs 32 have been joined to the two long webs 34 following the separation shown in Figure 5. The two short webs 32, produced from the profile 30 by slitting blades 60, are folded over or inverted, and are joined to the long webs 34 by rib and groove members 38. The adhesive 36, as a consequence of this inversion, is disposed on those faces of the short webs 32 facing the long webs 34. Ultimately, the long webs 34 are separated from one another by being slit down the center. Adhesive 36, it will be particularly noted, faces polymeric resin material 40 following the inversion.

Profile 44 of Figure 4 is processed in a similar manner. Ultimately, adhesive 50 faces polymeric resin material 54 when short webs 46 are inverted and joined to long webs 48 in a manner similar to that shown in Figure 6.

In a subsequent packaging machine operation, the peel seal is formed by the application of heat and pressure from peel-seal sealing bars positioned parallel to the peel seal area on the zipper.

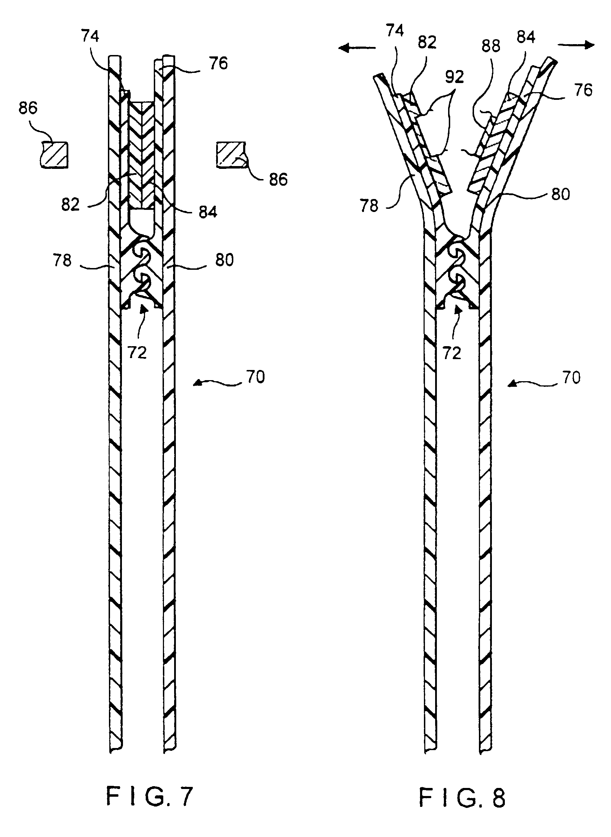

Referring to Figure 7, a schematic cross-sectional view of the top of a reclosable plastic bag 70, a zipper 72, made from profile 30 shown in Figures 3, 5 and 6, has a short web 74 and a long web 76, which are bonded to front sheet 78 and back sheet 80, respectively. Adhesive 82 on short web 74 and polymeric resin material 84 on long web 76 face one another and are bonded together by peel-seal sealing bars 86. The latter are not necessarily as wide as the adhesive 82 and polymeric resin material 84.

Figure 8 shows a result of breaking the peel seal in bag 70 by pulling the front sheet 78 apart from the back sheet 80 at the top of the bag 70 above the zipper 72 as suggested by the arrows. Most of adhesive 82 remains attached to the short web 74, except where peel-seal sealing bars 86 have caused a portion 88 of adhesive 82 to bond to polymeric resin material 84. To open bag 70, it was necessary to break adhesive 82, allowing the portion 88 to remain bonded to polymeric resin material 84. The act of breaking the adhesive 82 creates an internal strain thereon causing a discoloration or whitening thereof. This discoloration or whitening makes the imprint of the peel-seal sealing bars 86 visible, and provides a positive visual indication that the peel seal has been broken.

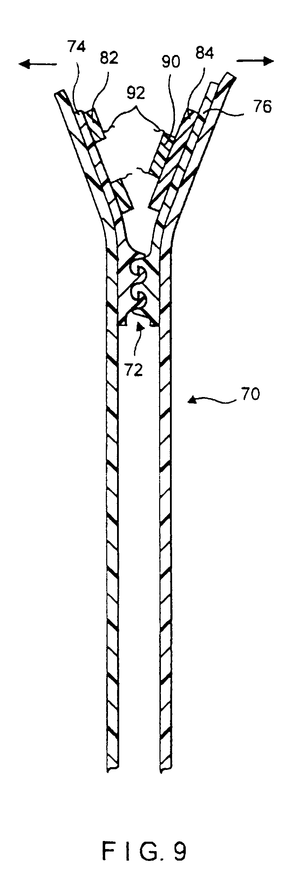

The peel seal shown in Figure 8 may be described as a cohesive peel seal, because the peelable adhesive splits or cleaves within itself leaving a portion on both sides of the peeled open structure. Another peel seal, known as a delamination peel seal, is shown in Figure 9, is formed where the adhesive 82 completely delaminates from the short web 74 in the region where the peel-seal sealing bars 86 have bonded it to the polymeric resin material 86. Again, most of the adhesive 82 remains attached to the short web 74, except where a portion 90 has completely delaminated therefrom. To open bag 70, it is again necessary to break adhesive 82, allowing the portion 90 to remain bonded to the polymeric resin material 84. As before, the act of breaking the adhesive 82 creates an internal strain thereon causing a discoloration or whitening thereof, making the imprint of the peel-seal sealing bars 86 visible and providing a positive visual indication that the peel seal has been broken.

The temperature of the peel-seal sealing bars 86 governs whether a cohesive or delamination peel seal is ultimately obtained. At low temperature (340°F or lower at a dwell time of 1.4 seconds) of the peel-seal sealing bars 86, a delamination peel seal will be obtained. On the other hand, at temperatures above 340°F for a 1.4-second dwell time, the peelable adhesive will fuse to the side it was originally applied to and result in a cohesive peel seal.

In either kind of peel seal, cohesive or delamination, the breaking of the adhesive 82 in Figures 8 and 9 can lead to the occurrence of small fibers 92 or pieces of adhesive along the edges of the break. This may be minimized by applying the adhesive to the short webs in the form of a plurality of parallel beads or lines, as discussed above in connection with Figure 4.

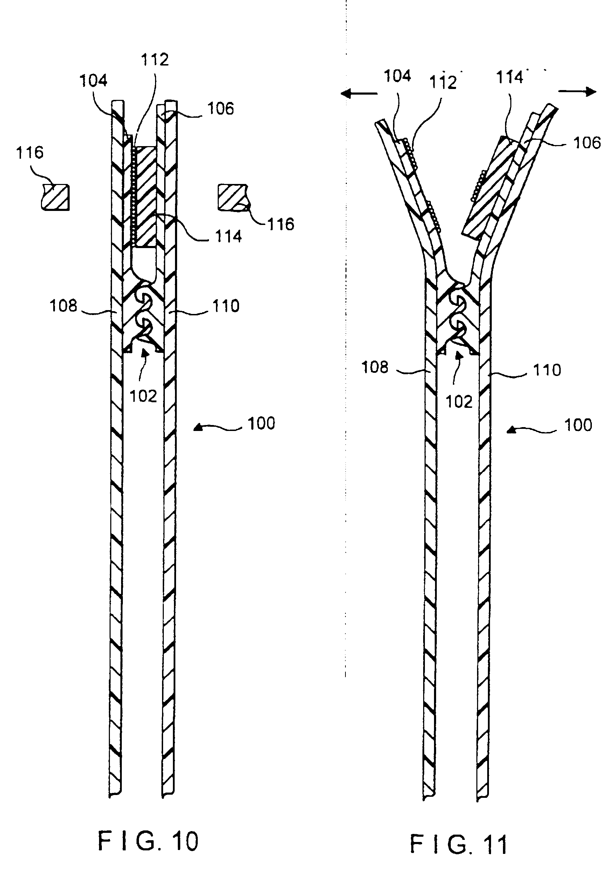

Figure 10 is a schematic cross-sectional view of the top of a reclosable plastic bag 100 having a zipper 102 made from profile 44 shown in Figure 4. A short web 104 and a long web 106 are bonded to a front sheet 108 and a back sheet 110, respectively. Adhesive 112, arranged as a plurality of parallel beads or lines on short web 104, and polymeric resin material 114 on long web 106 face one another and are bonded together by peel-seal sealing bars 116.

The result of breaking the peel seal in bag 100 by pulling the front sheet 108 apart from the back sheet 110 at the top of the bag 100 above the zipper 102 as suggested by the arrows is shown in Figure 11. The adhesive 112 remains attached to the short web 104 except where peel-seal sealing bars 116 have caused some of the adhesive 112 to bond to the polymeric resin material 114. To open bag 100, those lines or beads of adhesive 112 directly acted upon by peel-seal sealing bars 116 are detached from short web 104 and remain bonded to polymeric resin material 114. The act of detachment sets up an internal strain within the beads remaining attached to polymeric resin material 114 causing a discoloration or whitening. This discoloration or whitening makes the imprint of the peel-seal sealing bars 116 visible, and provides a positive indication that the peel seal has been broken. The application of the adhesive 112 onto the short web 104 in the form of beads or lines minimizes the occurrence of fibers 92 when the peel seal is broken.

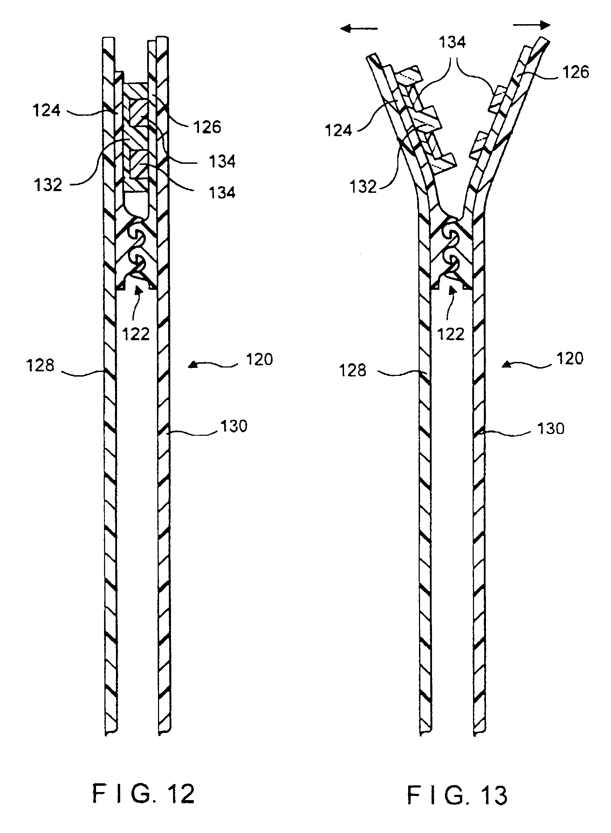

Figure 12 is a schematic cross-sectional view of the top of a reclosable plastic bag 120 having a zipper 122. A short web 124 and a long web 126 are bonded to a front sheet 128 and a back sheet 130, respectively. Zipper 122, short web 124, long web 126 and the front and back sheets 128, 130 are, as above, of polyethylene.

Short web 124 is coated with an adhesive 132, such as Pierce & Stevens E4009D, comprising a polyethylene/ethylene vinyl acetate composition having a high cohesive strength, but a low adhesive strength to polyethylene. As was the case in U.S. Patents Nos. 5,425,825 and 5,435,864, the surface of short web 124 which ultimately faces long web 126 in a manufactured bag 120 may be given a surface modifying treatment, so that this kind of polymeric resin material may preferentially adhere thereto.

Long web 126, on the other hand, is provided with ribs of a different adhesive 134, such as Pierce & Stevens E4051D, comprising a polyethylene/ethylene vinyl acetate composition having a low cohesive strength, but a high adhesive strength to polyethylene. In addition, adhesive 134 has a great affinity for adhesive 132. In this regard, Pierce & Stevens E4009D adhesive has a great affinity for Pierce & Stevens E4051D adhesive.

After peel-seal sealing bars seal the top of plastic bag 120, adhesive 132 forms a peel seal with long web 126 in the spaces between the ribs of adhesive 134. In addition, adhesive 134 becomes bonded to adhesive 132.

The result of breaking the peel seal in bag 120 by pulling the front sheet 128 apart from the back sheet 130 at the top of bag 120 above the zipper 122 as suggested by the arrows is shown in Figure 13. Adhesive 132, lacking a strong adhesion to polyethylene, peels away from long web 126. Adhesive 134, having a strong adhesion to polyethylene and a strong adhesion to adhesive 132, but a low cohesive strength, breaks apart, some of it remaining on the long web 126, while the rest remains embedded in adhesive 132. The breaking of ribs of adhesive 134 sets up an internal strain therewithin causing a discoloration or whitening, which makes the imprint of the peel-seal sealing bars visible, and provides a positive indication that the peel seal has been broken.

Modifications to the above would be obvious to those skilled in the art, but would not bring the invention so modified beyond the scope of the appended claims.

## Claims

1. A method for forming a tamper-evident, non-reclosable peel seal for a reclosable plastic package comprising the steps of:
extruding a first flexible interlocking rib and groove member having a first web;
bonding a first polymeric resin material to said first web of said first flexible interlocking rib and groove member;
extruding a second flexible interlocking rib and groove member having a second web;
bonding a second polymeric resin material to said second web of said second flexible interlocking rib and groove member, said second polymeric resin material having a great affinity for said first polymeric resin material;
bonding said first polymeric resin material to said second polymeric resin material by clamping said first web and said second web together with first and second heated peel-seal sealing bars.

2. A method as claimed in claim 1 wherein said first polymeric resin material is a polyethylene/ethylene vinyl acetate composition having a high cohesive strength, and a weak adhesion to polyethylene.

3. A method as claimed in claim 1 wherein said first polymeric resin material is a polyethylene/ethylene vinyl acetate composition having a low cohesive strength, and a strong adhesion to polyethylene.

4. A method as claimed in claim 2 wherein said second polymeric resin material is a polyethylene/ethylene vinyl acetate composition having a low cohesive strength, and a strong adhesion to polyethylene.

5. A method as claimed in claim 3 wherein said second polymeric resin material is a polyethylene/ethylene vinyl acetate composition having a high cohesive strength, and a strong adhesion to polyethylene.

6. A method as claimed in claim 1 wherein said first polymeric resin material is bonded to said first web of said first flexible interlocking rib and groove member by coextrusion therewith.

7. A method as claimed in claim 6 wherein said first polymeric resin material is coextruded onto said first web in the form of a plurality of parallel beads.

8. A method as claimed in claim 6 wherein said first polymeric resin material is coextruded onto said first web in the form of a layer.

9. A method as claimed in claim 1 wherein said second polymeric resin material is bonded to said second web of said second flexible interlocking rib and groove member by coextrusion therewith.

10. A method as claimed in claim 9 wherein said second polymeric resin material is coextruded onto said second web in the form of a plurality of parallel beads.

11. A method as claimed in claim 9 wherein said second polymeric resin material is coextruded onto said second web in the form of a layer.

12. A method as claimed in claim 1 wherein the first of said bonding steps comprises:
treating a surface of said first web of said first flexible interlocking rib and groove member to enhance its receptiveness to said first polymeric resin material; and
applying said first polymeric resin material to said treated surface of said first web.

13. A method as claimed in claim 1 wherein the second of said bonding steps comprises:
treating a surface of said second web of said second flexible interlocking rib and groove member to enhance its receptiveness to said second polymeric resin material; and
applying said second polymeric resin material to said treated surface of said second web.

14. A method as claimed in claim 1 wherein said first polymeric resin material is bonded to said first web of said first flexible interlocking rib and groove member by coating thereon.

15. A method as claimed in claim 14 wherein said first polymeric resin material is coated onto said first web in the form of a plurality of parallel beads.

16. A method as claimed in claim 14 wherein said first polymeric resin material is coated onto said first web in the form of a layer.

17. A method as claimed in claim 1 wherein said second polymeric resin material is bonded to said second web of said second flexible interlocking rib and groove member by coating thereon.

18. A method as claimed in claim 17 wherein said second polymeric resin material is coated onto said second web in the form of a plurality of parallel beads.

19. A method as claimed in claim 17 wherein said second polymeric resin material is coated onto said second web in the form of a layer.

20. A zipper closure for a reclosable plastic package, said zipper closure having a tamper-evident, non-reclosable peel seal, said zipper closure comprising:
a first flexible interlocking rib and groove member having a first web;
a second flexible interlocking rib and groove member having a second web, said first flexible interlocking rib and groove member being interlocked with said second interlocking rib and groove member and said first web facing said second web;
a first polymeric resin material bonded to a surface of said first web facing said second web; and
a second polymeric resin material bonded to a surface of said second web facing said first web, said second polymeric resin material having a great affinity for said first polymeric resin material and being bonded thereto,
whereby a portion of at least one of said first and second polymeric resin materials separates from the remainder thereof when the zipper closure is opened to visually indicate that the peel seal has been broken.

21. A zipper closure as claimed in claim 20 wherein said first polymeric resin material is a polyethylene/ethylene vinyl acetate composition having a high cohesive strength and a weak adhesion to polyethylene.

22. A zipper closure as claimed in claim 20 wherein said first polymeric resin material is a polyethylene/ethylene vinyl composition having a low cohesive strength, and a strong adhesion to polyethylene.

23. A zipper closure as claimed in claim 21 wherein said second polymeric resin material is a polyethylene/ethylene vinyl composition having a low cohesive strength, and a strong adhesion to polyethylene.

24. A zipper closure as claimed in claim 22 wherein said second polymeric resin material is a polyethylene/ethylene vinyl composition having a high cohesive strength, and a strong adhesion to polyethylene.

25. A zipper closure as claimed in claim 20 wherein said first polymeric resin material forms a layer on said first web.

26. A zipper closure as claimed in claim 20 wherein said first polymeric resin material forms a plurality of parallel beads on said first web.

27. A zipper closure as claimed in claim 20 wherein said second polymeric resin material forms a layer on said second web.

28. A zipper closure as claimed in claim 20 wherein said second polymeric resin material forms a plurality of parallel beads on said second web.
